(19) Europäisches Patentamt
European Patent Office
Office européen des brevets

(11) **EP 3 265 222 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **16707118.2**

(22) Anmeldetag: **01.03.2016**

(51) Int Cl.:
**B01J 8/08** (2006.01)   **B01J 8/12** (2006.01)
**B01J 8/18** (2006.01)   **B01J 8/40** (2006.01)

(86) Internationale Anmeldenummer:
**PCT/EP2016/054289**

(87) Internationale Veröffentlichungsnummer:
**WO 2016/139193 (09.09.2016 Gazette 2016/36)**

(54) **VORRICHTUNG ZUR HERSTELLUNG VON PULVERFÖRMIGEM POLY(METH)ACRYLAT**

DEVICE FOR PRODUCING POLY(METH)ACRYLATE IN POWDER FORM

SYSTÈME POUR FABRIQUER DU POLY(MÉTH)ACRYLATE PULVÉRULENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2015 EP 15157147**

(43) Veröffentlichungstag der Anmeldung:
**10.01.2018 Patentblatt 2018/02**

(73) Patentinhaber: **BASF SE**
**67056 Ludwigshafen am Rhein (DE)**

(72) Erfinder:
• **BAYER, Robert**
**74889 Sinsheim (DE)**
• **FREIBERG, Jürgen**
**68623 Lampertheim (DE)**
• **SCHLIWA, Rudolf**
**63755 Alzenau (DE)**
• **KRÜGER, Marco**
**68219 Mannheim (DE)**

(74) Vertreter: **BASF IP Association**
**BASF SE**
**G-FLP-C006**
**67056 Ludwigshafen (DE)**

(56) Entgegenhaltungen:
**DE-A1- 19 744 710     US-A1- 2011 237 754**

# EP 3 265 222 B1

**Beschreibung**

Die Erfindung geht aus von einer Vorrichtung zur Herstellung von pulverförmigem Poly(meth)acrylat, umfassend einen Reaktor zur Tropfenpolymerisation mit einer Vorrichtung zur Vertropfung einer Monomerlösung für die Herstellung des Poly(meth)acrylats mit Löchern, durch die die Monomerlösung eingebracht wird, einer Zugabestelle für ein Gas oberhalb der Vorrichtung zur Vertropfung, mindestens einer Gasentnahmestelle am Umfang des Reaktors und einer Wirbelschicht, wobei der Reaktor oberhalb der Gasentnahmestelle einen Bereich mit konstantem hydraulischem Innendurchmesser aufweist und unterhalb der Gasentnahmestelle einen hydraulischen Innendurchmesser aufweist, der stetig kleiner wird.

Poly(meth)acrylate finden Anwendung insbesondere als wasserabsorbierende Polymere, die beispielsweise bei der Herstellung von Windeln, Tampons, Damenbinden und anderen Hygieneartikeln oder auch als wasserzurückhaltende Mittel im landwirtschaftlichen Gartenbau verwendet werden.

Die Eigenschaften der wasserabsorbierenden Polymere können über den Vernetzungsgrad eingestellt werden. Mit steigendem Vernetzungsgrad steigt die Gelfestigkeit und sinkt die Absorptionskapazität. Dies bedeutet, dass mit steigender Absorption unter Druck die Zentrifugenretentionskapazität abnimmt, wobei bei sehr hohen Vernetzungsgraden auch die Absorption unter Druck wieder abnimmt.

Zur Verbesserung der Anwendungseigenschaften, beispielsweise der Flüssigkeitsleitfähigkeit in der Windel und der Absorption unter Druck, werden wasserabsorbierende Polymerpartikel im Allgemeinen nachvernetzt. Dadurch steigt nur der Vernetzungsgrad an der Partikeloberfläche, wodurch die Absorption unter Druck und die Zentrifugenretentionskapazität zumindest teilweise entkoppelt werden können. Diese Nachvernetzung kann in wässriger Gelphase durchgeführt werden. Im Allgemeinen werden aber gemahlene und abgesiebte Polymerpartikel an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Zur Herstellung der wasserabsorbierenden Polymerpartikel sind unterschiedliche Verfahren bekannt. So können zum Beispiel die zur Herstellung von Poly(meth)acrylaten eingesetzten Monomere und gegebenenfalls Additive einem Mischkneter zugegeben werden, in dem die Monomere zum Polymer reagieren. Durch rotierende Wellen mit Knetbarren im Mischkneter wird das entstehende Polymer in Brocken zerrissen. Das dem Kneter entnommene Polymer wird getrocknet und gemahlen und einer Nachbearbeitung zugeführt. In einer alternativen Variante wird das Monomer in Form einer Monomerlösung, die auch weitere Additive enthalten kann, in einen Reaktor zur Tropfenpolymerisation eingebracht. Beim Einbringen der Monomerlösung in den Reaktor zerfällt diese in Tropfen. Bei dem Mechanismus der Tropfenbildung kann es sich um turbulenten oder laminaren Strahlzerfall oder aber auch um Vertropfung handeln. Der Mechanismus der Tropfenbildung hängt dabei von den Eintrittsbedingungen und den Stoffeigenschaften der Monomerlösung ab. Die Tropfen fallen im Reaktor nach unten, wobei das Monomer zum Polymer reagiert. Im unteren Bereich des Reaktors befindet sich eine Wirbelschicht, in die die durch die Reaktion aus den Tropfen entstehenden Polymerpartikel fallen. In der Wirbelschicht findet dann eine Nachreaktion statt. Entsprechende Verfahren sind zum Beispiel in der WO-A 2006/079631, der WO-A 2008/086976, der WO-A 2007/031441, der WO-A 2008/040715, der WO-A 2010/003855 und der WO-A 2011/026876 beschrieben.

Nachteil bei allen Verfahren, die nach dem Prinzip der Sprühtrocknung durchgeführt werden, bei denen Monomerlösung in Tropfen zerfällt und in einem Reaktor unter Bildung des Polymeren nach unten fällt, ist, dass Tropfen beim Zusammenprall koaleszieren können und an die Wandung des Reaktors prallende Tropfen anhaften können und so zu einer ungewünschten Belagbildung führen können.

Aufgabe der vorliegenden Erfindung ist es daher, eine Vorrichtung zur Herstellung von pulverförmigem Poly(meth)acrylat mit einem Reaktor zur Tropfenpolymerisation bereitzustellen, bei der eine Belagbildung an der Wandung des Reaktors vermieden oder zumindest stark reduziert wird.

Gelöst wird die Aufgabe durch eine Vorrichtung zur Herstellung von pulverförmigem Poly(meth)-acrylat, umfassend einen Reaktor zur Tropfenpolymerisation mit einer Vorrichtung zur Vertropfung einer Monomerlösung für die Herstellung des Poly(meth)acrylats mit Löchern, durch die die Monomerlösung eingebracht wird, einer Zugabestelle für ein Gas oberhalb der Vorrichtung zur Vertropfung, mindestens einer Gasentnahmestelle am Umfang des Reaktors und einer Wirbelschicht, wobei der Reaktor oberhalb der Gasentnahmestelle einen Bereich mit konstantem hydraulischem Innendurchmesser aufweist und unterhalb der Gasentnahmestelle einen hydraulischen Innendurchmesser aufweist, der stetig kleiner wird, wobei im Bereich mit stetig kleiner werdendem hydraulischem Innendurchmesser an der Außenseite des Reaktors Klopfer angebracht sind, wobei die Klopfer jeweils eine Schlagenergie von 25 J bis 165 J erzeugen und die Anzahl der Klopfer so gewählt wird, dass eine flächenspezifische Schlagenergie von 1 bis 7 J/m$^2$ aufgebracht wird.

Durch den Einsatz von Klopfern, die jeweils eine Schlagenergie von 25 J bis 165 J erzeugen und einer Anzahl der Klopfer derart, dass eine flächenspezifische Schlagenergie von 1 bis 7 J/m$^2$ aufgebracht wird, können Anbackungen deutlich reduziert oder sogar vollständig vermieden werden. Bevorzugt erzeugen die eingesetzten Klopfer eine Schlagenergie im Bereich von 50 bis 150 J und insbesondere im Bereich von 75 bis 125 J. Die flächenspezifische Schlagenergie liegt vorzugsweise im Bereich von 2 bis 6 J/m$^2$ und insbesondere im Bereich von 3 bis 5 J/m$^2$. Eine Schlagenergie von weniger als 25 J ist nicht ausreichend, um sich bildende Anbackungen zu lösen und eine Schlagenergie von mehr als 165 J kann zu Beschädigungen am Reaktormantel im Bereich der Klopfer führen. Eine flächenspezifische Schlagenergie von weniger als 1 J/m$^2$ führt ebenfalls zu einer nicht ausreichenden Abreinigung der Ablagerungen. Die erforderliche spezifische Schlagenergie lässt sich durch die Anzahl der Klopfer und den Abstand der Klopfer zueinander einstellen. Je niedriger die Schlagenergie eines Klopfers ist und je größer die spezifische Schlagenergie sein soll, umso mehr Klopfer müssen eingesetzt werden. Die Klopfer werden dabei vorzugsweise äquidistant verteilt auf der Außenseite des Bereichs des Reaktors mit stetig abnehmendem hydraulischem Innendurchmesser angeordnet. Die Werte gelten für Edelstahl mit üblicherweise für Sprühtrocknungsanlagen verbauten Wandstärken von 1 bis 10 mm.

Im Rahmen der vorliegenden Erfindung können hydraulische oder pneumatische Klopfer eingesetzt werden. Üblicherweise haben derartige Klopfer einen Stempel, der hydraulisch oder pneumatisch betrieben wird und der gegen den Mantel schlägt. Hierdurch wird der Reaktormantel in Schwingungen versetzt, die dazu führen, dass sich Ablagerungen lösen.

Überraschenderweise hat sich gezeigt, dass sich Ablagerungen insbesondere im unteren Bereich des Reaktors und da vor allem in dem Bereich mit stetig kleiner werdendem hydraulischem Innendurchmesser bilden. Daher ist es ausreichend, in diesem Bereich Klopfer vorzusehen.

Der hydraulische Durchmesser d$_h$ berechnet sich zu:

$$d_h = 4 \cdot A/U$$

wobei A die Fläche und U der Umfang ist. Durch die Verwendung des hydraulischen Durchmessers ist die Gestaltung des Reaktors unabhängig von der Form der Querschnittsfläche. Diese kann zum Beispiel kreisförmig, rechteckig, in Form eines beliebigen Polygons, oval oder elliptisch sein. Bevorzugt ist jedoch eine kreisförmige Querschnittsfläche.

Ein Reaktor zur Tropfenpolymerisation umfasst im Allgemeinen ein Kopf mit einer Vorrichtung zur Vertropfung einer Monomerlösung, einen mittleren Bereich, durch den die vertropfte Monomerlösung fällt und zum Polymer umgewandelt wird und eine Wirbelschicht, in die die Polymertropfen fallen. Die Wirbelschicht schließt dabei den Bereich des Reaktors, in dem der hydraulische Innendurchmesser abnimmt, nach unten ab.

Damit die Monomerlösung, die die Vorrichtung zur Vertropfung verlässt, nicht an die Wandung des Reaktors gesprüht wird und um gleichzeitig den Reaktor sowohl statisch als auch vom Materialaufwand vorteilhaft zu gestalten, ist es bevorzugt, den Kopf des Reaktors in Form eines Kegelstumpfs auszubilden und die Vorrichtung zur Vertropfung im kegelstumpfförmigen Kopf des Reaktors zu positionieren.

Durch die kegelstumpfförmige Gestaltung des Kopfs des Reaktors kann im Vergleich zu einer zylindrischen Gestaltung Material eingespart werden. Zudem dient ein kegelstumpfförmig gestalteter Kopf zur Verbesserung der statischen Stabilität des Reaktors. Ein weiterer Vorteil ist, dass das Gas und die Tropfen aus der Monomerlösung besser in Kontakt miteinander gebracht werden können. Aufgrund der Problematik der Belagsbildung ließe sich die Vorrichtung zur Vertropfung auch bei zylindrischer Gestaltung des Reaktors nicht größer ausführen, jedoch wäre in diesem Fall die Querschnittsfläche für die Gaszufuhr wesentlich größer, so dass ein großer Teil des Gases eine wesentlich längere Zeit benötigen würde, bis ein Kontakt mit den Tropfen erfolgt und dieser in den die Tropfen enthaltenden Strom eingemischt wird. Zudem löst die Gasströmung bei einem Öffnungswinkel des Konus von mehr als 7° von der Oberfläche ab und bildet Wirbel, was wiederum zu einer schnelleren Durchmischung beiträgt.

Um die Höhe des Reaktors so niedrig wie möglich zu halten, ist es weiterhin vorteilhaft, wenn die Vorrichtung zur Vertropfung der Monomerlösung so weit oben wie möglich im kegelstumpfförmig gestalteten Kopf angeordnet ist. Das bedeutet, dass die Vorrichtung zur Vertropfung der Monomerlösung auf der Höhe des kegelstumpfförmig gestalteten Kopfes angeordnet ist, in der der Durchmesser des kegelstumpfförmig gestalteten Kopfes ungefähr dem Durchmesser der Vorrichtung zur Vertropfung entspricht.

Um zu vermeiden, dass die Monomerlösung, die die Vorrichtung zur Vertropfung im Bereich der äußersten Löcher verlässt, gegen die Wandung des kegelstumpfförmig gestalteten Kopfes gesprüht wird, ist es bevorzugt, wenn der hydraulische Durchmesser des kegelstumpfförmig gestalteten Kopfes in der Höhe, in der die Vorrichtung zur Vertropfung angeordnet ist, 2 bis 30 %, mehr bevorzugt 4 bis 25 % und insbesondere 5 bis 20 %, größer ist als der hydraulische Durchmesser, der zu der Fläche gehört, die durch eine die äußersten Löcher verbindende Linie umschlossen wird. Der etwas größere hydraulische Durchmesser des Kopfes stellt zudem sicher, dass Tropfen auch unterhalb des Reaktorkopfes nicht frühzeitig an die Reaktorwand prallen und dort anhaften.

Oberhalb der Vorrichtung zur Vertropfung der Monomerlösung befindet sich eine Zugabestelle für Gas, so dass Gas und Tropfen im Gleichstrom von oben nach unten durch den Reaktor strömen. Da sich im unteren Bereich des Reaktors die Wirbelschicht befindet, führt dies dazu, dass im unteren Bereich des Reaktors Gas in die entgegengesetzte Richtung von unten nach oben strömt. Da Gas sowohl von oben als auch von unten in den Reaktor eingebracht wird, ist es notwendig, das Gas zwischen der Vorrichtung zur Vertropfung der Monomerlösung und der Wirbelschicht zu entnehmen. Bevorzugt ist die Gasentnahmestelle am Übergang von der zylindrischen Wandung des Reaktors zum Bereich mit abnehmendem hydraulischem Innendurchmesser positioniert. Durch die entsprechende Querschnittserweiterung auf den maximalen Reaktordurchmesser auf Höhe der Gasentnahmestelle wird ein Partikelmitriss in das Reaktorabgas verhindert. Die Querschnittsfläche des Gasentnahmeringes ist dabei so groß, dass die mittlere Gasgeschwindigkeit im Ring 0,25 bis 3 m/s, bevorzugt 0,5 bis 2,5 m/s und insbesondere 1,0 bis 1,8 m/s beträgt. Kleinere Werte verringern zwar den Partikelmitriss, führen jedoch zu unwirtschaftlich großen Dimensionen, größere Werte führen zu einem unerwünscht hohen Partikelmitriss.

Der Bereich des Reaktors, an dem die Gasentnahmestelle positioniert ist, ist dabei vorzugsweise so gestaltet, dass der Durchmesser des Bereichs mit abnehmendem hydraulischem Innendurchmesser an deren oberen Ende größer ist als der Durchmesser des oberen Teils des Reaktors. Das von oben durch den Reaktor strömende Gas umströmt das untere Ende der Reaktorwandung des oberen Teils und wird über mindestens einen Gasabzug aus dem zwischen dem oberen Ende des Bereichs mit abnehmendem hydraulischem Innendurchmesser und dem in den Bereich mit abnehmendem hydraulischem Innendurchmesser hineinragenden unteren Ende der Reaktorwandung gebildeten ringförmigen Raum entnommen. An den Gasabzug ist eine Vorrichtung zur Abtrennung von Feststoffen angeschlossen, in der Polymerpartikel, die mit der Gasströmung aus dem Reaktor abgezogen werden, abgetrennt werden können. Als Vorrichtung zur Abtrennung von Feststoffen eignen sich zum Beispiel Filter oder Fliehkraftabscheider, beispielsweise Zyklone. Besonders bevorzugt sind Zyklone.

Der hydraulische Durchmesser der Wirbelschicht wird erfindungsgemäß so gewählt, dass die Fläche der Wirbelschicht mindestens so groß ist, dass ein senkrecht nach unten fallender Tropfen aus den äußersten Löchern der Vorrichtung zur Vertropfung in die Wirbelschicht fällt. Hierzu ist die Fläche der Wirbelschicht mindestens genauso groß und genauso geformt wie die Fläche, die von einer die äußersten Löcher der Vorrichtung zur Vertropfung verbindenden Linie gebildet wird. Weiterhin ist es auch möglich, dass die Oberfläche der Wirbelschicht größer ist als die Fläche, die von der die äußersten Löcher der Vorrichtung zur Vertropfung verbindenden Linie gebildet wird. Besonders bevorzugt ist es dabei, wenn die Oberfläche der Wirbelschicht 5 bis 50 %, mehr bevorzugt 10 bis 40 % und insbesondere 15 bis 35 % größer ist als die von der die äußersten Löcher der Vorrichtung zur Vertropfung verbindenden Linie gebildete Fläche. Hierbei entspricht die Form der Oberfläche der Wirbelschicht jeweils der Form der Fläche, die von der die äußersten Löcher verbindenden Linie umschlossen wird. Wenn zum Beispiel die Oberfläche der Wirbelschicht kreisförmig ist, ist auch die von der die äußersten Löcher verbindenden Linie umschlossene Fläche kreisförmig, wobei der Durchmesser der Oberfläche der Wirbelschicht größer sein kann als der Durchmesser der Fläche, die von der die äußersten Löcher der Vorrichtung zur Vertropfung verbindenden Linie gebildet wird.

Üblicherweise tritt die Monomerlösung in Form eines Flüssigkeitsstrahls aus den Löchern der Vorrichtung zur Vertropfung aus, der dann im Reaktor in Tropfen zerfällt. Der Zerfall des Flüssigkeitsstrahls hängt zum einen von der Menge der Flüssigkeit ab, die durch die Löcher pro Zeiteinheit austritt, zum anderen von der Geschwindigkeit und Menge des durch den Reaktor strömenden Gases. Weiterhin beeinflussen die Stoffeigenschaften der Monomerlösung und die Geometrie der Löcher die Art des Strahlzerfalles. Im Rahmen der vorliegenden Erfindung wird der Tropfenzerfall auch als Eintropfen oder Vertropfen bezeichnet.

Damit genug Gas an der Vorrichtung zur Vertropfung der Monomerlösung vorbeiströmen kann, so dass eine gleichmäßige Gasgeschwindigkeit im Reaktor erzielt werden kann und keine zu große Beschleunigung und Verwirbelung des Gases beim Umströmen der Vorrichtung erfolgt, ist es weiterhin bevorzugt, wenn das Verhältnis der von der Vorrichtung zur Vertropfung abgedeckten Fläche in dem Reaktor bezogen auf die Fläche, die von der die äußersten Löcher verbindenden Linie umschlossen wird, kleiner als 50% ist und bevorzugt im Bereich zwischen 3 und 30 % liegt.

Weiterhin ist es bevorzugt, wenn die Anzahl der Löcher bezogen auf die Fläche, die durch die die äußersten Löcher verbindende Linie gebildet wird, im Bereich von 100 bis 1000 Löchern/m$^2$, bevorzugt im Bereich von 150 bis 800 Löcher/m$^2$ und insbesondere im Bereich von 200 bis 500 Löcher/m$^2$ liegt. Hierdurch wird sichergestellt, dass die an den Löchern gebildeten Tropfen einen ausreichend großen Abstand voneinander haben und zudem ausreichend mit dem durch den Reaktor strömenden Gas in Kontakt kommen können.

In einer Ausführungsform umfasst die Vorrichtung zur Vertropfung der Monomerlösung Kanäle, an deren Unterseite die Löcher ausgebildet sind und die sternförmig angeordnet sind. Durch die sternförmige Anordnung der Kanäle ist es insbesondere in einem Reaktor mit kreisförmigem Querschnitt möglich, eine gleichmäßige Verteilung der Tropfen im Reaktor zu erhalten. Die Zugabe erfolgt durch die Kanäle, in die die Monomerlösung eingeleitet wird. Durch die Löcher an der Unterseite der Kanäle tritt die Flüssigkeit aus und bildet die Tropfen.

Damit die aus den Kanälen austretenden Tropfen schnellstmöglich mit dem die Kanäle umströmenden Gas in Kontakt kommen, ist es weiterhin bevorzugt, wenn die Kanäle eine möglichst geringe Breite aufweisen. Die Breite der Kanäle liegt dabei vorzugsweise im Bereich von 25 bis 500 mm, weiter bevorzugt im Bereich von 100 bis 400 mm und insbesondere im Bereich von 150 bis 350 mm.

Um eine gute Abreinigung des Reaktors und eine Entfernung von Ablagerungen zu gewährleisten, ist es bevorzugt, wenn die Klopfer Impulsklopfer sind. Der Einsatz von Impulsklopfern erlaubt es, eine vorgegebene Schlagfolge einzustellen. Ein weiterer Vorteil des Einsatzes von Impulsklopfern ist, dass diese einen schlagartigen Impuls und damit einen Energiepeak liefern, wodurch das an der Wandung anhaftende Material gelöst wird. Eine gute Abreinigung von Anbackungen lässt sich insbesondere dann erzielen, wenn die Klopfer so ausgelegt sind, dass diese mindestens einen Schlag pro Minute erzeugen können.

Besonders bevorzugt ist es, wenn die Klopfer so ausgelegt sind, dass an mindestens einem Klopfer, bevorzugt an allen Klopfern, eine Schlagintervall-Konfiguration mit mindestens zwei Schlägen innerhalb von 1 bis 10 s und einer Pause von 30 bis 300 s bis zu mindestens einem nachfolgenden Schlag einstellbar ist. Mit einer entsprechenden Schlagintervall-Konfiguration lassen sich Anbackungen besonders gut verhindern und es ist ein dauerhafter Betrieb des Reaktors über einen Zeitraum von mehreren Wochen oder Monaten mit nur einem kleinen Anteil an Grobgut im Austrag möglich. Besonders bevorzugt ist es, wenn der Abstand zwischen den zwei Schlägen im Bereich von 2 bis 5 s und die Pause bis zu mindestens einem nachfolgenden Schlag, bevorzugt bis zu zwei nachfolgenden Schlägen innerhalb von 1 bis 10 s, insbesondere im Bereich von 2 bis 5 s, im Bereich von 30 bis 200 s und besonders bevorzugt im Bereich von 30 bis 100 s liegt. Innerhalb des Zeitraums zwischen 2 Schlägen liegt auch die Zeit, die benötigt wird, um den Klopfer zu laden, damit dieser seinen nächsten Schlag abgeben kann. Ein kommerziell erhältlicher Klopfer hat zum Beispiel eine Ladezeit von 2 s, so dass für einen Abstand zwischen zwei Schlägen von 5 s zusätzlich zur Ladezeit eine Pause von 3 s eingestellt werden muss.

In einer Ausführungsform der Erfindung weisen alle Klopfer die gleiche Intervallzeit und die gleiche Schlagenergie auf. Diese Einstellung ist besonders beim Starten des Prozesses bevorzugt.

Alternativ ist es auch möglich, dass mindestens zwei Klopfer unterschiedliche Intervallzeiten und unterschiedliche Schlagenergie aufweisen. Eine Einstellung mit unterschiedlichen Intervallzeiten und unterschiedlicher Schlagenergie der Klopfer kann sich durch eine Optimierung der Schlagfrequenz ergeben, wobei diese so eingestellt wird, dass nur in kritischen Bereichen die maximale Schlagfrequenz eingestellt wird. Kritische Bereiche sind dabei die Bereiche, in denen besonders schnell Anbackungen entstehen. Diese Bereiche können zum Beispiel optisch beim Reinigen des Reaktors in einer Betriebspause erfasst werden. Alternativ können die entsprechenden Bereiche auch mit Hilfe von Ultraschallsensoren zur Messung der Dicke von Ablagerungen erfasst werden, da die Ablagerungen in den kritischen Bereichen eine größere Dicke aufweisen als in den weniger kritischen Bereichen. Besonders bevorzugt ist es jedoch, im Mantel des Reaktors Schaugläser vorzusehen oder eine Kameraüberwachung zu installieren, mit der der Reaktor im laufenden Betrieb beobachtet werden kann, um die Bereiche zu erfassen, in denen besonders schnell Anbackungen entstehen.

Zusätzlich zu den Klopfern im Bereich des Reaktors mit stetig abnehmendem hydraulischen Innendurchmesser ist es auch möglich, zusätzlich im unteren Drittel des Bereichs des Reaktors mit konstantem hydraulischem Innendurchmesser an der Außenseite des Reaktors Klopfer anzubringen. Mit den Klopfern im unteren Drittel des Bereichs des Reaktors mit konstantem hydraulischem Durchmesser, der sich unmittelbar oberhalb des Bereichs mit stetig abnehmendem hydraulischem Innendurchmesser anschließt, wird sichergestellt, dass sich auch im Bereich des Reaktors mit konstantem hydraulischem Innendurchmesser keine Anbackungen bilden.

Zur Erhöhung der Stabilität des Reaktors können außen auf dem Mantel Verstärkungsrippen aufgebracht werden. Wenn außen auf dem Mantel Verstärkungsrippen aufgebracht sind, können die Klopfer mit einer Konsolenkonstruktion auf den Verstärkungsrippen montiert werden, wobei die Schlagenergie durch die Konsolenkonstruktion auf die Bleche des Mantels oberhalb und unterhalb der Verstärkungsrippen gelenkt wird. Hierdurch kann mit einem Klopfer ein größerer Wirkradius abgedeckt werden, da die Verstärkungsrippe nicht als Dämpfer wirkt, der den Wirkradius der Klopfer begrenzt.

Zusätzlich zu Klopfern können auch Vibrations-Übertrager, Ultraschall-Übertrager, bewegliche Schaber oder Rührorgane sowie Gasdüsen als mechanische oder pneumatische Abreinigungsvorrichtung eingesetzt werden. Weiterhin kann die Reaktorwandung mit geeigneten Anti-Haftmitteln wie PTFE, Polyamid, Polyurethan oder Silikon behandelt beziehungsweise beschichtet werden oder sogar komplett aus solchem Materialen bestehen.

Um die Bildung von Ablagerungen und Anbackungen zu verhindern ist es weiterhin bevorzugt, wenn der Reaktor zusätzlich zu den Klopfern im Bereich mit stetig kleiner werdendem hydraulischem Innendurchmesser eine Beheizung aufweist.

In einer bevorzugten Ausführungsform ist die Beheizung im Bereich des Reaktors mit stetig kleiner werdendem hydraulischen Innendurchmesser so ausgelegt, dass diese eine Heizleistung im Bereich von 20 bis 5000 W/m$^2$ einbringt. Bevorzugt liegt die Heizleistung im Bereich von 100 bis 3000 W/m$^2$ und insbesondere im Bereich von 200 bis 1500 W/m$^2$. Eine Heizleistung unterhalb von 20 W/m$^2$ ist nicht ausreichend, um Anbackungen zu vermeiden, eine Heizleistung oberhalb von 5000 W/m$^2$ führt zu einer irreversiblen Schädigung des an die Wandung des Reaktors anprallenden Materials und somit zu einer minderwertigen Produktqualität.

Die Beheizung kann durch jede beliebige, dem Fachmann bekannte Heizeirichtung realisiert werden. So ist es zum Beispiel möglich, zur Beheizung eine elektrische Heizung einzusetzen. Alternativ kann die Beheizung zum Beispiel auch durch eine direkte Befeuerung, beispielsweise mit Gas oder Öl realisiert werden. Bevorzugt ist es jedoch, wenn der Mantel zur Beheizung als Doppelmantel oder in Form von Heizschlangen, die außen auf dem Mantel aufgebracht sind, ausgeführt ist, wobei der Doppelmantel oder die Heizschlangen von einem Heizmedium durchströmt werden. Geeignete Heizmedien sind zum Beispiel Thermalöl, Wasser oder Wasserdampf. Besonders bevorzugt ist eine Beheizung mit Wasserdampf.

Wenn zur Beheizung auf den Mantel des Reaktors Heizschlangen aufgebracht sind, verlaufen diese vorzugsweise mäanderförmig, so dass die Wärme durch die Heizschlangen gleichmäßig eingebracht wird. Sollten zusätzlich Verstärkungsrippen vorgesehen sein, laufen die jeweiligen mäanderförmig verlaufenden Heizschlagen vorzugsweise zwischen zwei Verstärkungsrippen, so dass die Heizschlangen die Verstärkungsrippen nicht schneiden. Sollte nur eine Heizschlange vorgesehen sein, ist es bevorzugt, wenn die Heizschlange zwischen zwei Verstärkungsrippen mäanderförmig den Mantel umläuft und dann über eine Verstärkungsrippe geführt wird und darauffolgend wieder mäanderförmig den Mantel zwischen zwei Verstärkungsrippen umläuft.

Der Bereich des Reaktors mit stetig kleiner werdendem hydraulischem Innendurchmesser kann jeden beliebigen Verlauf aufweisen, wobei es besonders bevorzugt ist, wenn der Bereich mit stetig kleiner werdendem hydraulischem Innendurchmesser konisch ist. Der konische Verlauf hat den Vorteil, dass Polymerpartikel, die sich aus den Tropfen während ihres Falles durch Polymerisation der Monomerlösung gebildet haben, in die Wirbelschicht fallen können ohne zusammen mit dem Abgas aus dem Reaktor abgesaugt zu werden. Polymerpartikel, die direkt auf den Bereich mit stetig kleiner werdendem hydraulischem Innendurchmesser auftreffen, können in die Wirbelschicht rutschen.

Ausführungsbeispiele der Erfindung sind in den Figuren dargestellt und werden in der nachfolgenden Beschreibung näher erläutert.

Es zeigen:

Figur 1    einen Längsschnitt durch einen Reaktor zur Tropfenpolymerisation,

Figur 2    eine schematische Darstellung des Bereichs mit stetig abnehmendem hydraulischem Innendurchmesser mit Heizschlangen und Klopfern.

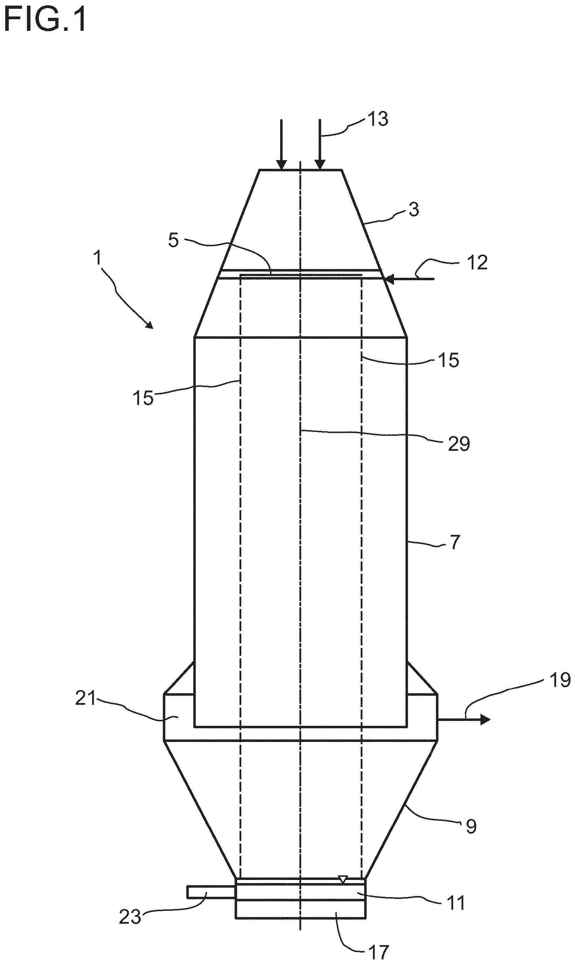

Figur 1 zeigt einen Längsschnitt durch einen erfindungsgemäß ausgebildeten Reaktor.

Ein Reaktor 1 zur Tropfenpolymerisation umfasst einen Reaktorkopf 3, in dem eine Vorrichtung zur Vertropfung 5 aufgenommen ist, einen mittleren Bereich 7, in dem die Polymerisationsreaktion erfolgt und einen unteren Bereich 9 mit einer Wirbelschicht 11, in der die Reaktion abgeschlossen wird.

Zur Durchführung der Polymerisationsreaktion zur Herstellung des Poly(meth)acrylats wird der Vorrichtung zur Vertropfung 5 eine Monomerlösung über eine Monomerzufuhr 12 zugeführt. Wenn die Vorrichtung zur Vertropfung 5 mehrere Kanäle aufweist, ist es bevorzugt, jedem Kanal über eine eigene Monomerzufuhr 12 die Monomerlösung zuzuführen. Die Monomerlösung tritt durch in Figur 1 nicht dargestellte Löcher in der Vorrichtung zur Vertropfung 5 aus und zerfällt in einzelne Tropfen, die im Reaktor nach unten fallen. Über eine erste Zugabestelle für ein Gas 13 oberhalb der Vorrichtung zur Vertropfung 5 wird ein Gas, beispielsweise Stickstoff oder Luft, in den Reaktor 1 eingeleitet. Die Gasströmung unterstützt dabei den Zerfall der aus den Löchern der Vorrichtung zur Vertropfung 5 austretenden Monomerlösung in einzelne Tropfen. Zusätzlich wird durch die Gasströmung unterstützt, dass sich die einzelnen Tropfen nicht berühren und zu größeren Tropfen koaleszieren.

Um zum Einen den zylindrischen mittleren Bereich 7 des Reaktors möglichst kurz zu gestalten und zudem zu vermeiden, dass Tropfen an die Wandung des Reaktors 1 prallen, ist der Reaktorkopf 3 vorzugsweise, wie hier dargestellt, konisch ausgebildet, wobei sich die Vorrichtung zur Vertropfung 5 im konischen Reaktorkopf 3 oberhalb des zylindrischen Bereichs befindet. Alternativ ist es allerdings auch möglich, den Reaktor auch im Reaktorkopf 3 zylindrisch mit einem Durchmesser wie im mittleren Bereich 7 zu gestalten. Bevorzugt ist jedoch eine konische Gestaltung des Reaktorkopfs 3. Die Position der Vorrichtung zur Vertropfung 5 wird so gewählt, dass zwischen den äußersten Löchern, durch die die Monomerlösung zugeführt wird und der Wandung des Reaktors noch ein ausreichend großer Abstand ist, um ein Anprallen der Tropfen an die Wandung zu verhindern. Hierzu sollte der Abstand mindestens im Bereich von 50 bis 1500 mm, bevorzugt im Bereich von 100 bis 1250 mm und insbesondere im Bereich von 200 bis 750 mm liegen. Selbstverständlich ist auch ein größerer Abstand zur Wandung des Reaktors möglich. Dies hat jedoch den Nachteil, dass mit einem größeren Abstand eine schlechtere Ausnutzung des Reaktorquerschnittes einhergeht.

Der untere Bereich 9 schließt mit einer Wirbelschicht 11 ab, in die die während des Falls aus den Monomertropfen entstandenen Polymerpartikel fallen. In der Wirbelschicht erfolgt die Nachreaktion zum gewünschten Produkt. Erfindungsgemäß sind die äußersten Löcher, durch die die Monomerlösung vertropft wird, so positioniert, dass ein senkrecht nach unten fallender Tropfen in die Wirbelschicht 11 fällt. Dies kann zum Beispiel dadurch realisiert werden, dass der hydraulische Durchmesser der Wirbelschicht mindestens so groß ist wie der hydraulische Durchmesser der Fläche, die von einer die äußersten Löcher in der Vorrichtung zur Vertropfung 5 verbindenden Linie umschlossen wird, wobei die Querschnittsfläche der Wirbelschicht und die von der die äußersten Löcher verbindenden Linie gebildete Fläche die gleiche Form haben und sich die Mittelpunkte der beiden Flächen in einer senkrechten Projektion aufeinander an derselben Position befinden. Die äußerste Position der äußeren Löcher bezogen auf die Position der Wirbelschicht 11 ist in Figur 1 mit Hilfe einer gestrichelten Linie 15 dargestellt.

Um weiterhin zu vermeiden, dass Tropfen auch im mittleren Bereich 7 an die Wandung des Reaktors prallen, ist der hydraulische Durchmesser auf Höhe der Mitte zwischen der Vorrichtung zur Vertropfung und der Gasentnahmestelle mindestens 10% größer als der hydraulische Durchmesser der Wirbelschicht.

Der Reaktor 1 kann dabei jede beliebige Querschnittsform aufweisen. Bevorzugt ist der Querschnitt des Reaktors 1 jedoch kreisförmig. In diesem Fall entspricht der hydraulische Durchmesser dem Durchmesser des Reaktors 1.

Oberhalb der Wirbelschicht 11 nimmt der Durchmesser des Reaktors 1 in der hier dargestellten Ausführungsform zu, so dass sich der Reaktor 1 im unteren Bereich 9 von unten nach oben konisch erweitert. Dies hat den Vorteil, dass im Reaktor 1 entstandene Polymerpartikel, die auf die Wandung treffen, an der Wandung nach unten in die Wirbelschicht 11 rutschen können. Zur Vermeidung von Anbackungen können zusätzlich hier nicht dargestellte Klopfer außen am konusförmigen Teil des Reaktors vorgesehen sein, mit denen die Wandung des Reaktors in Schwingungen versetzt wird, wodurch sich anhaftende Polymerpartikel lösen und in die Wirbelschicht 11 rutschen.

Zur Gaszufuhr für den Betrieb der Wirbelschicht 11, befindet sich unterhalb der Wirbelschicht 11 ein Gasverteiler 17, durch den das Gas in die Wirbelschicht 11 eingeblasen wird.

Da sowohl von oben als auch von unten Gas in den Reaktor 1 eingeleitet wird, ist es erforderlich, an einer geeigneten Position Gas aus dem Reaktor 1 zu entnehmen. Hierzu ist am Übergang vom mittleren Bereich 7 mit konstantem Querschnitt zum sich konisch von unten nach oben erweiternden unteren Bereich 9 mindestens eine Gasentnahmestelle 19 angeordnet. Hierbei ragt der zylindrische mittlere Bereich 7 mit seiner Wandung in den sich nach oben konisch erweiternden unteren Bereich 9 hinein, wobei der Durchmesser des konischen unteren Bereichs 9 an dieser Position größer ist als der Durchmesser des mittleren Bereichs 7. Hierdurch wird eine die Wandung des mittleren Bereichs 7 umlaufende ringförmige Kammer 21 gebildet, in die das Gas einströmt und durch die mindestens eine Gasentnahmestelle 19, die mit der ringförmigen Kammer 21 verbunden ist, abgezogen werden kann.

Die nachreagierten Polymerpartikel der Wirbelschicht 11 werden über eine Produktentnahmestelle 23 im Bereich der Wirbelschicht entnommen.

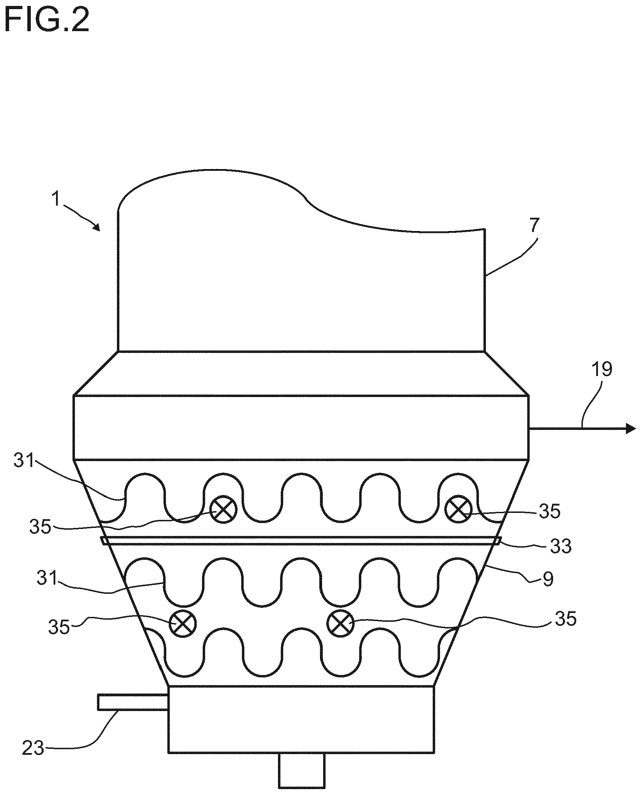

In Figur 2 ist der Bereich mit stetig abnehmendem hydraulischem Innendurchmesser mi t Heizschlangen und Klopfern schematisch dargestellt.

Um Anbackungen im Inneren des unteren konischen Bereichs 9 zu verhindern, werden erfindungsgemäß Klopfer 35 angebracht.

Zusätzlich ist es bevorzugt, den unteren konischen Bereich 9 des Reaktors 1 zu beheizen. Hierzu ist es zum Beispiel möglich, Heizschlangen 31 außen auf den konischen unteren Bereich 9 aufzubringen. Zur Beheizung der Reaktorwandung des unteren konischen Bereichs 9 werden die Heizschlagen 31 von einem Temperiermedium, zum Beispiel Thermalöl, Wasser oder bevorzugt Dampf, durchströmt. Alternativ zu auf dem konischen unteren Bereich 9 aufgebrachten Heizschlangen 31, die von einem Temperiermedium durchströmt werden, ist es auch möglich, zum Beispiel eine elektrische Beheizung vorzusehen.

Wenn zur Beheizung Heizschlagen 31 vorgesehen sind, werden die Klopfer 35 vorzugsweise zwischen die Heizschlangen 31 positioniert, damit diese direkt auf die Wandung des unteren konischen Bereichs 9 einwirken können.

Bei von einem Temperiermedium durchströmten Heizschlangen 31 werden Temperatur und Volumenstrom des Temperiermediums so eingestellt, dass eine Heizleistung im Bereich von 20 bis 5000 W/m$^2$ in den unteren konischen Bereich 9 des Reaktors 1 eingebracht wird.

Um die Wandung des unteren konischen Bereichs 9 zu stabilisieren, ist es möglich, Verstärkungsringe 33 auf der Wandung aufzubringen. Die Anordnung der Verstärkungsringe 33 und der Heizschlangen 31 ist dabei so, dass durch die Verstärkungsringe 33 das Einbringen von Wärme in den unteren konischen Bereich 9 des Reaktors 1 nicht behindert wird.

Die Klopfer 35 können entweder im Bereich unterhalb und/oder oberhalb eines Verstärkungsrings 33 montiert werden oder, bevorzugt, mit Hilfe einer Konsolenkonstruktion auf einem Verstärkungsring 33. Die Konsolenkonstruktion ist dabei so gestaltet, dass die Schlagenergie des Klopfers 35 oberhalb und unterhalb des Verstärkungsrings 33 auf den Mantel des Reaktors 1 aufgebracht wird.

**Beispiele**

Zur Herstellung von Poly(meth)acrylat wird ein Reaktor zur Tropfenpolymerisation wie in Figur 1 dargestellt, eingesetzt. Der Bereich des Reaktors mit konstantem Durchmesser hat eine Höhe von 22 m und einen Durchmesser von 3,4 m. Der Durchmesser der Wirbelschicht beträgt 3 m und die Höhe 0,25 m.

Am Kopf des Reaktors wurde als Trocknungsgas Stickstoff zugeführt mit einem Restsauerstoffanteil von 1 bis 4 Vol.-%. Die Menge an Trocknungsgas wurde so eingestellt, dass die Gasgeschwindigkeit im zylindrischen Teil des Reaktors 0,8 m/s betrug. Am Produktauslass wurde die Temperatur gemessen und während des Betriebs des Reaktors durch Einstellung der Temperatur des Trocknungsgases auf 117°C gehalten.

Das Gas zur Erzeugung der Wirbelschicht wurde mit einer Temperatur von 122°C und einer relativen Feuchte von 4% zugeführt. Die Gasgeschwindigkeit in der Wirbelschicht betrug 0,8 m/s und die Verweilzeit des Produkts in der Wirbelschicht lag bei 120 min. Das Produkt wurde dem Reaktor über eine Zellradschleuse entnommen und einem Fließbett mit einer Länge von 3 m, einer Breite von 0,65 m und einer Höhe von 0,5 m zugeführt. Das dem Fließbett zugeführte Gas hatte eine Temperatur von 60°C und die Gasmenge wurde so eingestellt, dass die Gasgeschwindigkeit im Fließbett 0,8 m/s betrug. Als Gas wurde Luft eingesetzt. Die Verweilzeit des Produkts im Fließbett betrug 1 min. Das dem Fließbett entnommene Produkt wurde abschließend gesiebt, um Partikel mit einem Partikeldurchmesser von mehr als 800 $\mu$m zu entfernen.

Zur Herstellung der dem Reaktor zugeführten Monomerlösung wurde zunächst Acrylsäure mit 3-fach ethoxyliertem Glycerintriacetat als Vernetzer und anschließend mit 37,3 Gew.-% Natriumacrylatlösung gemischt. Die Monomerlösung wurde auf eine Temperatur von 10°C temperiert. Vor Zugabe der Monomerlösung in den Reaktor wurden als Initiatoren Natriumperoxodisulfat-Lösung mit einer Temperatur von 20°C und [2,2'-Azobis[2-(2-imidazolin-2-yl)propan]dihydrochlorid zusammen mit Bruggolite® FF7 mit einer Temperatur von 5°C mittels einem statischen Mischer zugemischt. Die Zugabe in den Reaktor erfolgte über 3 Kanäle mit Vertropferkassetten, die jeweils an ihrer Unterseite mit einer Vertropferplatte mit 256 Bohrungen mit einem Durchmesser von 170 $\mu$m und einem Abstand der Bohrungen von 15 mm verschlossen waren.

Die Vertropferkassetten wurden mit Hilfe von Wasser, das durch die Vertropferkassetten umlaufende Kanäle strömte, auf eine Temperatur von 8°C temperiert.

Die Vertropferplatten waren entlang ihrer Mittelachse gewinkelt mit einem Winkel von 3° zur Horizontalen. Als Material für die Vertropferplatten wurde Edelstahl genutzt. Die Länge der Vertropferplatten betrug 630 mm, die Breite 128 mm und die Höhe 1 mm.

Die dem Reaktor zugeführte Monomerlösung enthielt 10,45 Gew.-% Acrylsäure, 33,40 Gew.-% Natriumacrylat, 0,018 Gew.-% 3-fach ethoxyliertes Glycerintriacetat, 0,072 Gew.-% [2,2'-Azo-bis[2-(2-imidazolin-2-yl)propan]dihydrochlorid, 0,0029 Gew.-% einer 5 gew.-%igen Lösung Bruggolite® FF7 in Wasser, 0,054 Gew.-% einer 15 gew.-%igen Lösung Natriumperoxodisulfat in Wasser und Wasser. Zugeführt wurden dem Reaktor 1,6 kg/h Monomerlösung je Bohrung.

Das dem Reaktor entnommene Produkt hatte eine Schüttdichte von 680 g/l und einen mittleren Partikeldurchmesser von 407 $\mu$m.

Der untere konische Bereich des Reaktors hatte eine Fläche von 24,75 m$^2$ und eine Wandstärke von 5 mm. Auf dem konischen Bereich wurden für die einzelnen Beispiele Klopfer mit unterschiedlichen Schlagenergien und unterschiedliche Anzahlen an Klopfern eingesetzt. Die verwendeten Klopfer und die jeweilige Anzahl sowie das Ergebnis sind in Tabelle 1 aufgeführt. Die Klopfer wurden dabei jeweils gleichmäßig verteilt über die Fläche des unteren konischen Bereichs montiert.

Die Klopfer hatten jeweils eine Schlagintervallkonfiguration von 2 Schlägen mit einem Abstand von 4 s und eine Pause von 50 s bis zu den nachfolgenden 2 Schlägen.

Tabelle 1: Eingesetzte Klopfer und Ergebnisse

| Beispiel | Anzahl und Typ des eingesetzten Klopfers | Spezifische Schlagleistung [J/m$^2$] | Mittlere Betriebsdauer bis zum Abschalten und Ergebnisse |
|---|---|---|---|
| 1 | 6 Klopfer PKL 2100/5® der Firma Netter | 2,5 | Betriebszeit länger als 14 Tage, kontrollierte Belagbildung |
| 2 | 6 Klopfer PKL 730/3® der Firma Netter | 0,5 | Abschalten und Reinigung nach 5 Tagen notwendig |
| 3 | 9 Klopfer PKL 2100/4® der Firma Netter | 1,7 | Betriebszeit länger als 14 Tage, kontrollierte Belagbildung |
| 4 (Vergleich) | 9 Linearvibratoren NTP 28 B® der Firma Netter mit einer Frequenz von 1600 min$^{-1}$ | - | Abschalten und Reinigung nach 3 Tagen notwendig |

Die Schlagenergie wird aus den Herstellerangaben zum Klopfer berechnet. Aus den Herstellerangaben lässt sich entnehmen, dass ein Klopfer eine Schlagkraft von x kg aus 1 m Fallhöhe aufweist. Dieser Wert wird mit der Erdbeschleunigung g = 9,81 m/s$^2$ multipliziert, woraus sich die Schlagenergie in Joule ergibt. "x" steht hierbei für den vom Hersteller angegebenen Wert und ist klopferspezifisch.

Bezugszeichenliste

1 Reaktor
3 Reaktorkopf
5 Vorrichtung zur Vertropfung
7 mittlerer Bereich
9 unterer Bereich
11 Wirbelschicht
12 Monomerzufuhr
13 Zugabestelle für Gas
15 Position der äußersten Löcher in Bezug zur Wirbelschicht 11
17 Gasverteiler
19 Gasentnahmestelle
21 ringförmige Kammer
23 Produktentnahmestelle
29 Reaktorachse
31 Heizschlange
33 Verstärkungsring
35 Klopfer

**Patentansprüche**

1. Vorrichtung zur Herstellung von pulverförmigem Poly(meth)acrylat, umfassend einen Reaktor (1) zur Tropfenpolymerisation mit einer Vorrichtung (5) zur Vertropfung einer Monomerlösung für die Herstellung des Poly(meth)acrylats mit Löchern, durch die die Monomerlösung eingebracht wird, einer Zugabestelle (13) für ein Gas oberhalb der Vorrichtung (5) zur Vertropfung, mindestens einer Gasentnahmestelle (19) am Umfang des Reaktors (1) und einer Wirbelschicht (11), wobei der Reaktor (1) oberhalb der Gasentnahmestelle (19) einen Bereich mit konstantem hydraulischem Innendurchmesser aufweist und unterhalb der Gasentnahmestelle (19) einen hydraulischen Innendurchmesser aufweist, der stetig kleiner wird, **dadurch gekennzeichnet, dass** im Bereich mit stetig kleiner werdendem hydraulischem Innendurchmesser an der Außenseite des Reaktors (1) Klopfer (35) angebracht sind, wobei die Klopfer (35) jeweils eine Schlagenergie von 25 J bis 165 J erzeugen und die Anzahl der Klopfer (35) so gewählt wird, dass eine flächenspezifische Schlagenergie von 1 bis 7 J/m² aufgebracht wird.

2. Vorrichtung gemäß Anspruch 1, **dadurch gekennzeichnet, dass** die Klopfer (35) Impulsklopfer sind.

3. Vorrichtung gemäß Anspruch 1 oder 2, **dadurch gekennzeichnet, dass** die Klopfer (35) so ausgelegt sind, dass diese mindestens einen Schlag pro Minute erzeugen können.

4. Vorrichtung gemäß einem der Ansprüche 1 bis 3, **dadurch gekennzeichnet, dass** die Klopfer (35) so ausgelegt sind, dass an mindestens einem Klopfer (35) eine Schlagintervall-Konfiguration mit mindestens zwei Schlägen innerhalb von 1 bis 10 s und einer Pause von 30 bis 300 s bis zu mindestens einem nachfolgenden Schlag einstellbar ist.

5. Vorrichtung gemäß einem der Ansprüche 1 bis 4, **dadurch gekennzeichnet, dass** alle Klopfer (35) die gleiche Intervallzeit und die gleiche Schlagenergie aufweisen.

6. Vorrichtung gemäß einem der Ansprüche 1 bis 4, **dadurch gekennzeichnet, dass** mindestens zwei Klopfer (35) unterschiedliche Intervallzeiten und unterschiedliche Schlagenergie aufweisen.

7. Vorrichtung gemäß einem der Ansprüche 1 bis 6, **dadurch gekennzeichnet, dass** im unteren Drittel des Bereichs des Reaktors (1) mit konstantem hydraulischem Innendurchmesser an der Außenseite des Reaktors (1) Klopfer (35) angebracht sind.

8. Vorrichtung gemäß einem der Ansprüche 1 bis 7, **dadurch gekennzeichnet, dass** der Bereich mit stetig kleiner werdendem hydraulischem Innendurchmesser konisch ist.

9. Vorrichtung gemäß einem der Ansprüche 1 bis 8, **dadurch gekennzeichnet, dass** der Reaktor (1) im Bereich mit stetig kleiner werdendem hydraulischem Innendurchmesser eine Beheizung aufweist.

**10.** Vorrichtung gemäß Anspruch 9, **dadurch gekennzeichnet, dass** die Beheizung eine Heizleistung im Bereich von 20 bis 5000 W/m$^2$ einbringt.

**11.** Vorrichtung gemäß Anspruch 9 oder 10, **dadurch gekennzeichnet, dass** die Beheizung eine elektrische Heizung ist.

**12.** Vorrichtung gemäß Anspruch 9 oder 10, **dadurch gekennzeichnet, dass** der Mantel zur Beheizung als Doppelmantel oder in Form von Heizschlangen (31), die außen auf dem Mantel aufgebracht sind, ausgeführt ist, wobei der Doppelmantel oder die Heizschlangen (31) von einem Heizmedium durchströmt werden.

**Claims**

**1.** An apparatus for producing pulverulent poly(meth)acrylate, comprising a reactor (1) for droplet polymerization comprising an apparatus (5) for dropletization of a monomer solution for the production of the poly(meth)acrylate comprising holes through which the monomer solution is introduced, an addition point (13) for a gas above the apparatus (5) for dropletization, at least one gas withdrawal point (19) on the circumference of the reactor (1) and a fluidized bed (11), wherein above the gas withdrawal point (19) the reactor (1) comprises a region having a constant hydraulic internal diameter and below the gas withdrawal point (19) the reactor has a hydraulic internal diameter that steadily decreases, wherein in the region having a steadily decreasing hydraulic internal diameter there are tappers (35) affixed to the exterior of the reactor (1), wherein the tappers (35) each generate an impact energy of from 25 J to 165 J and the number of tappers (35) is chosen such that an area-specific impact energy of from 1 to 7 J/m$^2$ is applied.

**2.** The apparatus according to claim 1, wherein the tappers (35) are impulse tappers.

**3.** The apparatus according to either of claims 1 and 2, wherein the tappers (35) have a configuration such that they can generate at least one impact per minute.

**4.** The apparatus according to any of claims 1 to 3, wherein the tappers (35) have a configuration such that at least one tapper (35) is settable to provide an impact interval configuration comprising at least two impacts over a period of from 1 to 10 s and a pause of from 30 to 300 s before at least one subsequent impact.

**5.** The apparatus according to any of claims 1 to 4, wherein all tappers (35) exhibit the same interval time and the same impact energy.

**6.** The apparatus according to any of claims 1 to 4, wherein at least two tappers (35) exhibit different interval times and a different impact energy.

**7.** The apparatus according to any of claims 1 to 6, wherein there are tappers (35) affixed to the exterior of the reactor (1) in the lower third of the region of the reactor (1) having a constant hydraulic interior diameter.

**8.** The apparatus according to any of claims 1 to 7, wherein the region having a steadily decreasing hydraulic internal diameter is conical.

**9.** The apparatus according to any of claims 1 to 8, wherein the reactor (1) comprises a heating means in the region having a steadily decreasing hydraulic internal diameter.

**10.** The apparatus according to claim 9, wherein the heating means supplies a heat output in the range of from 20 to 5000 W/m$^2$.

**11.** The apparatus according to either of claims 9 and 10, wherein the heating means is an electric heater.

**12.** The apparatus according to either of claims 9 and 10, wherein the shell for heating is a double shell or takes the form of heating coils (31) applied to the outside of the shell, wherein the double shell or the heating coils (31) have a heating medium flowing therethrough.

**Revendications**

1. Dispositif pour la fabrication de poly(méth)acrylate en poudre, comprenant un réacteur (1) pour la polymérisation en gouttes, muni d'un dispositif (5) pour la mise en gouttes d'une solution de monomères pour la fabrication du poly(méth)acrylate, comprenant des trous, au travers desquels la solution de monomères est introduite, un emplacement d'alimentation (13) pour un gaz au-dessus du dispositif (5) pour la mise en gouttes, au moins un emplacement de soutirage de gaz (19) sur la périphérie du réacteur (1) et un lit fluidisé (11), le réacteur (1) comprenant au-dessus de l'emplacement de soutirage de gaz (19) une zone de diamètre intérieur hydraulique constant, et présentant en dessous de l'emplacement de soutirage de gaz (19) un diamètre intérieur hydraulique qui rétrécit en continu, **caractérisé en ce que** des éléments de frappe (35) sont disposés dans la zone de diamètre intérieur hydraulique qui rétrécit en continu sur le côté extérieur du réacteur (1), les éléments de frappe (35) générant chacun une énergie de frappe de 25 J à 165 J, et le nombre d'éléments de frappe (35) étant choisi de telle sorte qu'une énergie de frappe spécifique à la surface de 1 à 7 J/m$^2$ soit appliquée.

2. Dispositif selon la revendication 1, **caractérisé en ce que** les éléments de frappe (35) sont des éléments de frappe à impulsions.

3. Dispositif selon la revendication 1 ou 2, **caractérisé en ce que** les éléments de frappe (35) sont conçus de telle sorte que ceux-ci puissent générer au moins une frappe par minute.

4. Dispositif selon l'une quelconque des revendications 1 à 3, **caractérisé en ce que** les éléments de frappe (35) sont conçus de telle sorte qu'une configuration d'intervalles de frappe comprenant au moins deux frappes en 1 à 10 s et une pause de 30 à 300 s jusqu'à au moins une frappe suivante puisse être ajustée pour au moins un élément de frappe (35).

5. Dispositif selon l'une quelconque des revendications 1 à 4, **caractérisé en ce que** tous les éléments de frappe (35) présentent la même durée d'intervalle et la même énergie de frappe.

6. Dispositif selon l'une quelconque des revendications 1 à 4, **caractérisé en ce qu'**au moins deux éléments de frappe présentent des durées d'intervalle différentes et des énergies de frappe différentes.

7. Dispositif selon l'une quelconque des revendications 1 à 6, **caractérisé en ce que** des éléments de frappe (35) sont disposés dans le tiers inférieur de la zone du réacteur (1) de diamètre intérieur hydraulique constant sur le côté extérieur du réacteur (1).

8. Dispositif selon l'une quelconque des revendications 1 à 7, **caractérisé en ce que** la zone de diamètre intérieur hydraulique qui rétrécit en continu est conique.

9. Dispositif selon l'une quelconque des revendications 1 à 8, **caractérisé en ce que** le réacteur (1) comprend un chauffage dans la zone de diamètre intérieur hydraulique qui rétrécit en continu.

10. Dispositif selon la revendication 9, **caractérisé en ce que** le chauffage apporte une puissance de chauffage dans la plage allant de 20 à 5 000 W/m$^2$.

11. Dispositif selon la revendication 9 ou 10, **caractérisé en ce que** le chauffage est un chauffage électrique.

12. Dispositif selon la revendication 9 ou 10, **caractérisé en ce que** l'enveloppe pour le chauffage est configurée sous la forme d'une double enveloppe ou sous la forme de serpentins de chauffage (31), qui sont disposés à l'extérieur sur l'enveloppe, la double enveloppe ou les serpentins de chauffage (31) étant traversés par un milieu chauffant.

## FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006079631 A
- WO 2008086976 A
- WO 2007031441 A
- WO 2008040715 A
- WO 2010003855 A
- WO 2011026876 A